# EUROPEAN PATENT SPECIFICATION

(11) **EP 4 108 987 B1**
(45) Date of publication and mention of the grant of the patent: **01.05.2024**
(21) Application number: 21774768.2
(22) Date of filing: 18.03.2021
(51) Int. Cl.: F23J 15/02, F23J 15/00, F24H 8/00, F24H 9/00

(54) **CONDENSING BOILER FOR PURIFYING EXHAUST GAS**
BRENNWERTKESSEL ZUR ABGASREINIGUNG
CHAUDIÈRE À CONDENSATION POUR PURIFIER LES GAZ D'ÉCHAPPEMENT

(30) Priority: 23.03.2020 KR 20200035115
(43) Date of publication of application: 28.12.2022
(73) Proprietor: Kim, Gwang Su, Yeosu-si, Jeollanam-do 59679 (KR)
(72) Inventor: Kim, Gwang Su, Yeosu-si, Jeollanam-do 59679 (KR)
(74) Representative: RGTH
(86) International application number: PCT/KR2021/003326
(87) International publication number: WO 2021/194157

(56) References cited:
- CN-U- 203 310 092
- DE-U1- 9 314 200
- JP-A- 2013 202 600
- KR-A- 20170 137 567
- KR-B1- 101 040 213
- KR-B1- 101 989 176
- KR-B1- 102 163 802

## Description

### Technical Field

The present invention relates to a condensing boiler for purifying exhaust gas, more specifically, to a condensing boiler for purifying exhaust gas capable of effectively purifying nitrogen oxide (NOx) and carbon monoxide contained in exhaust gas generated during operation of a boiler through a nitrogen oxide catalyst filter and a carbon monoxide catalyst filter, and preventing condensate generated when the condensing boiler is used from being discharged to the outside.

### Background Art

In general, a user operates a boiler in cold winter or to use hot water. The boiler usually uses gas, LPG, kerosene, coal, wood pellets, electricity, etc. as fuel.

The boiler is not much different from a vehicle, which is an internal combustion engine, in obtaining necessary energy by burning organic matters whatever the fuel is except electricity. That is, boilers as well as vehicles discharge exhaust gas.

The boiler discharges particulate matters, but nitrogen oxide (NOx) discharged as exhaust gas is the biggest problem. Especially, in a case in which gas is used as fuel, nitrogen oxide rather than particulate matters is more problematic. nitrogen oxide is discharged as gas, but is converted into fine particulate matters in the air, and contributes to making ozone when the sunlight is strong in the summer.

The nitrogen oxide emission of a household boiler in Korea is usually 200 mg/kWh, and it is known that the nitrogen oxide emission is about 30 to 50 mg/kWh in a case of a recently developed condensing boiler. However, it is very rare that a user in a general home replaces the existing boiler working well with a condensing boiler. Furthermore, in Korea, there is no mandatory regulations on the nitrogen oxide emission of household boilers and people thin particulate matters as a disaster but materials generating particulate matters are left untreated. So, a technology development to effectively reduce nitrogen oxide in exhaust gas without replacing the existing household boiler is urgent.

As the background of the present invention, Korean Patent No. 10-0751209 discloses a supply and exhaust pipe structure of a boiler. DE 9314200 U1 discloses a boiler with exhaust gas purification. An adsorption filter is placed in the exhaust duct. The filter adorbs CO and NOx.

### Disclosure

### Technical Problem

Accordingly, the present invention has been made in view of the above-mentioned problems occurring in the related art, and it is an object of the present invention to provide a condensing boiler for purifying exhaust gas which includes a nitrogen oxide catalyst filter installed on a filtering pipe connected to an exhaust pipe and a carbon monoxide catalyst filter installed in the exhaust pipe located inside a boiler body, thereby effectively filtering nitrogen oxide and carbon monoxide of exhaust gas generated when fuel is burned, and preventing condensate from being discharged to the outside by reusing the condensate generated when the condensing boiler is operated.

### Technical Solution

To accomplish the above-mentioned objects, according to the present invention, there is provided a condensing boiler for purifying exhaust gas including: a boiler body having a combustion unit including a burner for burning fuel and a heat exchanger; an exhaust pipe having one side of a longitudinal direction which is connected to the combustion unit, and the other side of the longitudinal direction extending upwards from the boiler body to protrude to the outside, and including a carbon monoxide catalyst filter mounted inside the one side of the longitudinal direction connected to the combustion unit to filter carbon monoxide contained in the exhaust gas generated during combustion of the fuel by the combustion unit; a filtering pipe mounted to be connected to the other side of the exhaust pipe in the longitudinal direction, and including a nitrogen oxide catalyst filter detachably mounted therein to filter nitrogen oxide contained in the exhaust gas flowing from the exhaust pipe; and a filter push unit mounted on the filtering pipe so that the nitrogen oxide catalyst filter is inclined when the nitrogen oxide catalyst filter is exchanged, wherein a protrusion jaw is formed on the inner circumference of the filtering pipe having the nitrogen oxide catalyst filter to protrude in the inward direction of the filtering pipe so that an edge of one side of the nitrogen oxide catalyst filter is caught to the protrusion jaw when the nitrogen oxide catalyst filter is inserted into the filtering pipe, wherein an elastic locking member of which both ends are inserted into a locking groove formed on the inner circumference of the filtering pipe comes into contact with an edge of the other side of the nitrogen oxide catalyst filter retained to the protrusion jaw, wherein the filter push unit includes: a pushing member of which one side of the longitudinal direction gets in close contact with the edge of one side of the nitrogen oxide catalyst filter and the other side of the longitudinal direction extends to the other side of the exhaust pipe in the longitudinal direction; and an extension adjustor connected to the other side of the pushing member in the longitudinal direction and exposed to the outside through a guide long hole formed in the filtering pipe, wherein the extension adjustor includes: an extension member extending outwardly from the other side of the pushing member in the longitudinal direction; and a rotational gripping member rotatably mounted at an end portion of the extension member and having a hanging protrusion inserted into a hole formed in the outer circumference of the filtering pipe, and wherein a tension spring member is mounted in the guide long hole in such a way that one side of the tension spring member in the longitudinal direction is connected to the extension adjustor and the other side is connected to the filtering pipe.

Moreover, the condensing boiler for purifying exhaust gas further includes a urea liquid spray unit for spraying a mixed liquid in which urea liquid is mixed into the exhaust pipe is mounted inside the boiler body. The urea liquid spray unit includes: a condensate neutralization case for accommodating acidic condensate flowing in a downward direction from the other side of the exhaust pipe in the longitudinal direction to neutralize the condensate by a neutralizing agent; a urea liquid case for accommodating a crude urea liquid therein; a fluid mixing case for mixing the condensate and the urea liquid flowing from the condensate neutralization case and urea liquid case; a motor mounted in a flowing pipeline connected to the fluid mixing case and the exhaust pipe; and a spray nozzle mounted at an end portion of the flowing pipeline to spray the mixed liquid flowing from the fluid mixing case into the exhaust pipe.

### Advantageous Effects

According to the present invention, the condensing boiler for purifying exhaust gas can effectively filter nitrogen oxide and carbon monoxide contained in exhaust by the nitrogen oxide catalyst filter and the carbon monoxide catalyst filter respectively installed in the exhaust pipe and the filtering pipe, and prevent condensate from being discharged to the outside so as to prevent a problem such as a backflow phenomenon of the condensate due to freezing of the condensate pipe.

### Description of Drawings

FIG. 1 is a diagram illustrating a state of a condensing boiler for purifying exhaust gas according to a preferred embodiment of the present invention.
FIG. 2 is a schematic diagram illustrating an internal state of the condensing boiler for purifying exhaust gas according to a preferred embodiment of the present invention.
FIG. 3 is a diagram illustrating a state in which a nitrogen oxide catalyst filter is installed inside a filtering pipe according to the present invention.
FIG. 4 is a diagram illustrating a state in which the nitrogen oxide catalyst filter is retained by a protruding jaw.
FIG. 5 is a cross-sectional view illustrating a state of a filter push unit according to the present invention.

### [Explanation of Reference Numerals]

100: boiler body 110: combustion unit
200: exhaust pipe 210: carbon monoxide catalyst filter
300: filtering pipe 310: coupling flange
320: nitrogen oxide catalyst filter 370: elastic locking member
400: filter push unit 410: pushing member
420: extension adjustor 430: tension spring member
440: first curtain type heat-resistant elastic member 450: second curtain type heat-resistant elastic member
500: urea liquid spray unit 510: condensate neutralization case
520: urea liquid case 530: fluid mixing case
540: motor 550: spray nozzle

### Mode for Invention

Hereinafter, a condensing boiler for purifying exhaust gas according to a preferred embodiment of the present invention will be described in detail with reference to the accompanying drawings. In the description, details of well-known features and techniques may be omitted to avoid unnecessarily obscuring the presented embodiments.

Furthermore, wordings to be described later are defined in consideration of the functions of the present invention, and may differ depending on the intentions of a manufacturer or a producer or custom. In the drawings, thicknesses of lines and sizes of constituent elements may be exaggerated for clarity and convenience in explanation. The description of the various embodiments is to be construed as exemplary only and does not describe every possible instance of the invention. Therefore, it should be understood that various changes may be made and equivalents may be substituted for various elements of the invention.

Throughout this specification, when a part is referred to as being "connected" to another part, this includes "direct connection" and "indirect connection" via an intervening part. Also, when a certain part "includes" a certain component, other components are not excluded unless explicitly described otherwise, and other components may in fact be included.

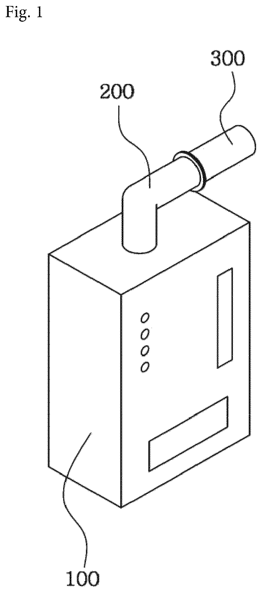

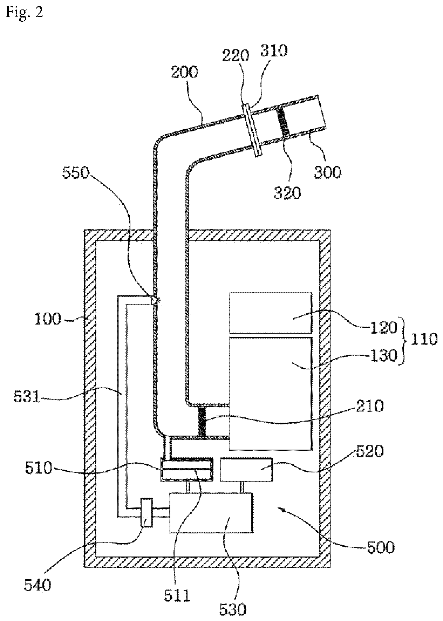

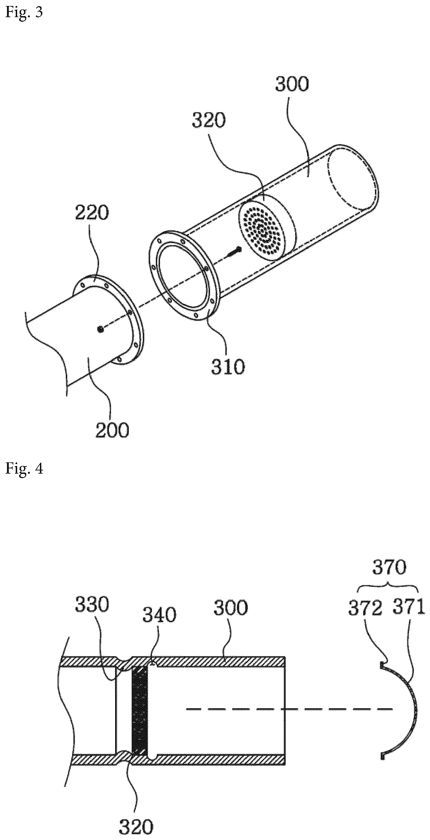

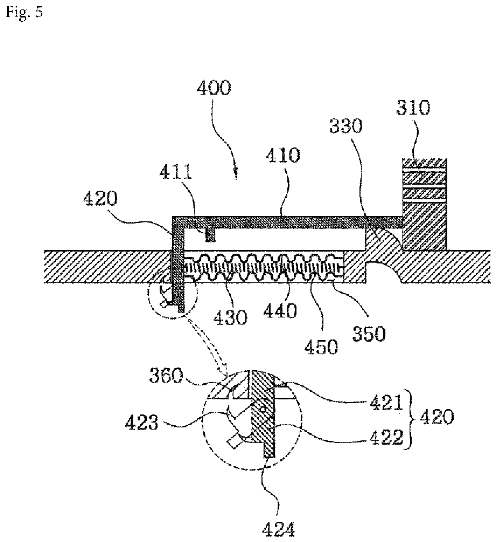

FIG. 1 is a diagram illustrating a state of a condensing boiler for purifying exhaust gas according to a preferred embodiment of the present invention, FIG. 2 is a schematic diagram illustrating an internal state of the condensing boiler for purifying exhaust gas according to a preferred embodiment of the present invention, FIG. 3 is a diagram illustrating a state in which a nitrogen oxide catalyst filter is installed inside a filtering pipe according to the present invention, FIG. 4 is a diagram illustrating a state in which the nitrogen oxide catalyst filter is retained by a protruding jaw, and FIG. 5 is a cross-sectional view illustrating a state of a filter push unit according to the present invention.

As illustrated in FIGS. 1 to 5, a condensing boiler for purifying exhaust gas according to a preferred embodiment of the present invention includes: a boiler body 100 having a combustion unit 110 composed of a burner 120 for combusting fuel and a heat exchanger 130 therein; an exhaust pipe 200 mounted to protrude outward from the inside of the boiler body 100; a filtering pipe 300 mounted on the exhaust pipe 200 and having a nitrogen oxide catalyst filter 320 mounted therein; and a urea liquid spray unit 500 mounted inside the boiler body 100 to spray a mixed liquid, in which urea liquid is mixed, into the exhaust pipe 200.

That is, the condensing boiler for purifying exhaust gas according to the preferred embodiment of the present invention allows nitrogen oxide (NOx) contained in exhaust gas generated during operation of the boiler to be purified by the nitrogen oxide catalyst filter.

The combustion unit 110 composed of a burner 120 for combusting fuel and a heat exchanger 130 is mounted in the boiler body 100, and the boiler body 100 is installed on a wall. In this instance, the heat exchanger 130 includes a hot water heat exchanger and a heating heat exchanger, and a plurality of pipes are connected to the heat exchanger 130.

In addition, the exhaust pipe 200 has one side of a longitudinal direction which is connected to the combustion unit 110, and the other side of the longitudinal direction extending upwards from the boiler body 100 to protrude to the outside so as to discharge exhaust gas generated when combustion starts.

In this instance, a carbon monoxide catalyst filter 210 is mounted inside one longitudinal side of the exhaust pipe 200 connected to the combustion unit 110 so as to filter carbon monoxide contained in the exhaust gas generated during combustion of the fuel by the combustion unit 110. Here, it is preferable that the carbon monoxide catalyst filter 210 is formed to have an outer circumferential shape corresponding to the inner circumferential shape of the exhaust pipe 200.

Furthermore, the carbon monoxide catalyst filter 210 can treat carbon monoxide contained in the exhaust gas generated during combustion in the combustion unit 110 of the boiler body 100. The carbon monoxide catalyst filter 210 is formed such that a catalyst of a platinum group metal selected from the group consisting of platinum (Pt) components, palladium (Pd) components, and combinations thereof is coated on a porous filter body.

In addition, the filtering pipe 300 is mounted to be connected to the other side of the exhaust pipe 200 in the longitudinal direction, and the nitrogen oxide catalyst filter 320 to filter nitrogen oxide contained in the exhaust gas flowing from the exhaust pipe 200 is detachably mounted inside the filtering pipe 300.

In this instance, the filtering pipe 300 includes a coupling flange 310 coupled to a mounting flange 220 provided at the other side of the exhaust pipe 200 in the longitudinal direction and detachably mounted on the exhaust pipe 200.

Although it is described that the filtering pipe 300 is mounted on the exhaust pipe 200 via the mounting flange 220 and the coupling flange 310, but the present invention is not limited thereto and there may be various embodiments of connecting the pipes to each other.

Moreover, the nitrogen oxide catalyst filter 320 mounted inside the filtering pipe 300 is capable of treating the nitrogen oxide contained in the exhaust gas flowing through the exhaust pipe 200, and selective reduction catalyst may be coated on the porous filter body.

In this instance, because the protrusion jaw 330 formed to protrude inwards from the filtering pipe 300 is formed along the inter circumference of the filter pipe 300, when the nitrogen oxide catalyst filter 320 is inserted into the filtering pipe 300 when the nitrogen oxide catalyst filter 320 is inserted into the filtering pipe 300, the edge of one side of the nitrogen oxide catalyst filter 320 is caught by the protrusion jaw 330.

In addition, an elastic locking member 370 which is inserted from the outside and of which both ends are inserted into a locking groove 340 formed on the inner circumference of the filtering pipe 300 comes into contact with the edge of the other side of the nitrogen oxide catalyst filter 320 retained to the protrusion jaw 330.

That is, the elastic locking member 370 includes an elastic member 371 of a "C"-shaped cross section and a locking member 372 formed at both longitudinal sides of the elastic member 371 to be inserted into the locking groove 340. When the locking member 372 is inserted into the locking groove 340 in a state in which the elastic member 371 is pursed and the filtering pipe 300 is pushed into the elastic member 371, the locking member 372 gets in close contact with the edge of the other side of the nitrogen oxide catalyst filter 320 by the elastic locking member 370.

Additionally, a filter push unit 400 is mounted on the filtering pipe 300 so that the nitrogen oxide catalyst filter 320 is inclined inside the filter pipe 300 when the nitrogen oxide catalyst filter 320 is exchanged.

In other words, even if the elastic locking member 370 is separated from the inside of the filtering pipe 300 to exchange the nitrogen oxide catalyst filter 320, since the circumference of the nitrogen oxide catalyst filter 320 is in close contact with the inner circumferential surface of the filtering pipe 300, it is difficult for a worker to insert the hand into the filtering pipe 300 to grasp the nitrogen oxide catalyst filter 320, and so, exchange workability is deteriorated. Accordingly, the present invention inclines the nitrogen oxide catalyst filter, which is an exchange object by the filter push unit 400, at a predetermined inclination angle in the filtering pipe 300 to allow the worker to smoothly grasp the inclined portion.

In an embodiment, the filter push unit 400 includes: a pushing member 410 of which one side of the longitudinal direction gets in close contact with the edge of one side of the nitrogen oxide catalyst filter 320 and the other side of the longitudinal direction extends to the other side of the exhaust pipe 200 in the longitudinal direction; and an extension adjustor 420 connected to the other side of the pushing member 410 in the longitudinal direction and exposed to the outside through a guide long hole 350 formed in the filtering pipe 300.

In this instance, the pushing member 410 includes a movement restricting member 411 to restrict movement of the nitrogen oxide catalyst filter 320 by being caught to the protrusion jaw 330 when the nitrogen oxide catalyst filter 320 is inclined.

The extension adjustor 420 includes: an extension member 421 extending outwardly from the other side of the pushing member 410 in the longitudinal direction; and a rotational gripping member 422 rotatably mounted at an end portion of the extension member 421 and having a hanging protrusion 423 inserted into a hole 360 formed in the outer circumference of the filtering pipe 300. The rotational gripping member 422 has a gripping body 424 formed at an end portion thereof so that the hanging protrusion 423 can be separated from the hole 360 when the worker crooks the finger around the gripping body 424 to pull the gripping body 424.

Furthermore, a tension spring member 430 is mounted in the guide long hole 350 in such a way that one side of the tension spring member 430 in the longitudinal direction is connected to the extension adjustor 420 and the other side is connected to the filtering pipe 300. A first curtain type heat-resistant elastic member 440 mounted in the inner circumferential direction of the filtering pipe 300, and a second curtain type heat-resistant elastic member 450 mounted in the outer circumferential direction of the filtering pipe 300 are mounted in the guide long hole 350.

Now, an operational state of the filter push unit 400 having the above configuration will be described. When the nitrogen oxide catalyst filter 320 is pushed into the filtering pipe 300, the end portion of the pushing member 410 comes into close contact with the nitrogen oxide catalyst filter 320 so that the filter push unit 400 is pushed toward the other side of the exhaust pipe 200 in the longitudinal direction. In this instance, the tension spring member 430 is extended to have a constant elastic force, and the first and second heat-resistant elastic members are spread to cover the guide long hole 350.

After that, the rotational gripping member 422 of the extension adjustor 420 is rotated so that the hanging protrusion 423 is inserted into the hole 360 to be caught, thereby controlling the movement of the filter push unit 400.

In a case in which exchange work of the nitrogen oxide catalyst filter 320 is performed, first, the elastic locking member 370 is separated from the inside of the filtering pipe 300. After that, when the hanging protrusion 423 of the rotational gripping member 422 is separated from the hole 360, the extension adjustor 420 is pulled by the elastic force of the tension spring member 430, so that the nitrogen oxide catalyst filter 320 is inclined at the predetermined angle inside the filtering pipe 300 by the pushing member 410.

After that, the worker can easily separate the nitrogen oxide catalyst filter 320 from the filtering pipe 300 by gripping the inclined portion of the nitrogen oxide catalyst filter 320 after pushing the hand into the filtering pipe 300.

Additionally, it is described that the exhaust pipe 200 and the filtering pipe 300 are provided separately, but the present invention is not limited thereto. The present invention may have a structure that the other side of the exhaust pipe 200 in the longitudinal direction extends such that the nitrogen oxide catalyst filter 320 can be mounted therein.

Meanwhile, a urea liquid spray unit 500 for spraying a mixed liquid in which urea liquid is mixed into the exhaust pipe 200 is mounted inside the boiler body 100.

In an embodiment, the urea liquid spray unit 500 includes: a condensate neutralization case 510 for accommodating acidic condensate flowing in a downward direction from the other side of the exhaust pipe 200 in the longitudinal direction to neutralize the condensate by a neutralizing agent; a urea liquid case 520 for accommodating a crude urea liquid therein; a fluid mixing case 530 for mixing the condensate and the urea liquid flowing from the condensate neutralization case 510 and urea liquid case 520; a motor 540 mounted in a flowing pipeline 531 connected to the fluid mixing case 530 and the exhaust pipe 200; and a spray nozzle 550 mounted at an end portion of the flowing pipeline 531 to spray the mixed liquid flowing from the fluid mixing case 530 into the exhaust pipe 200.

That is, in the present invention, the urea liquid spray unit 500 sprays the mixed liquid in which urea liquid is mixed into the exhaust pipe 200 to increase the filtering effect of the nitrogen oxide catalyst filter 320 and to prevent the condensate generated when the condensing boiler is used from being discharged to the outside, thereby preventing problem such as a backflow phenomenon of the condensate due to freezing of the condensate pipe.

In this instance, it is preferable that the condensate neutralization case 510, urea liquid case 520, and the fluid mixing case 530 are mounted to be separable from each other inside the boiler body 100, and a stirring means (not shown) may be mounted inside the fluid mixing case 530 to mix the condensate and the urea liquid.

In addition, the condensate neutralization case 510 includes a filtering plate 511 mounted therein to filter the condensate introduced from the exhaust pipe 200 so that the mixed liquid is sprayed in the form of fog and mist when being sprayed.

Although the exemplary embodiments of the present invention have been disclosed for illustrative purposes, those skilled in the art will appreciate that various modifications, additions and substitutions are possible, without departing from the scope of the invention as disclosed in the accompanying claims.

## Claims

1. A condensing boiler for purifying exhaust gas comprising:
a boiler body (100) having a combustion unit (110) including a burner (120) for burning fuel and a heat exchanger (130);
an exhaust pipe (200) having one side of a longitudinal direction which is connected to the combustion unit (110), and the other side of the longitudinal direction extending upwards from the boiler body (100) to protrude to the outside, and including a carbon monoxide catalyst filter (210) mounted inside the one side of the longitudinal direction connected to the combustion unit (110) to filter carbon monoxide contained in the exhaust gas generated during combustion of the fuel by the combustion unit (110);
a filtering pipe (300) mounted to be connected to the other side of the exhaust pipe (200) in the longitudinal direction, and including a nitrogen oxide catalyst filter (320) detachably mounted therein to filter nitrogen oxide contained in the exhaust gas flowing from the exhaust pipe (200); and
a filter push unit (400) mounted on the filtering pipe (300) so that the nitrogen oxide catalyst filter (320) is inclined when the nitrogen oxide catalyst filter (320) is exchanged,
wherein a protrusion jaw (330) is formed on the inner circumference of the filtering pipe (300) having the nitrogen oxide catalyst filter (320) to protrude in the inward direction of the filtering pipe (300) so that an edge of one side of the nitrogen oxide catalyst filter (320) is caught to the protrusion jaw (330) when the nitrogen oxide catalyst filter (320) is inserted into the filtering pipe (300),
wherein an elastic locking member (370) of which both ends are inserted into a locking groove (340) formed on the inner circumference of the filtering pipe (300) comes into contact with an edge of the other side of the nitrogen oxide catalyst filter (320) retained to the protrusion jaw (330),
wherein the filter push unit (400) includes: a pushing member (410) of which one side of the longitudinal direction gets in close contact with the edge of one side of the nitrogen oxide catalyst filter (320) and the other side of the longitudinal direction extends to the other side of the exhaust pipe (200) in the longitudinal direction; and an extension adjustor (420) connected to the other side of the pushing member (410) in the longitudinal direction and exposed to the outside through a guide long hole (350) formed in the filtering pipe (300),
wherein the extension adjustor (420) includes: an extension member (421) extending outwardly from the other side of the pushing member (410) in the longitudinal direction; and a rotational gripping member (422) rotatably mounted at an end portion of the extension member (421) and having a hanging protrusion (423) inserted into a hole (360) formed in the outer circumference of the filtering pipe (300), and
wherein a tension spring member (430) is mounted in the guide long hole (350) in such a way that one side of the tension spring member (430) in the longitudinal direction is connected to the extension adjustor (420) and the other side is connected to the filtering pipe (300).

2. The condensing boiler according to claim 1, further comprising:
a urea liquid spray unit (500) for spraying a mixed liquid in which urea liquid is mixed into the exhaust pipe (200) is mounted inside the boiler body (100).

3. The condensing boiler according to claim 2, wherein the urea liquid spray unit (500) includes:
a condensate neutralization case (510) for accommodating acidic condensate flowing in a downward direction from the other side of the exhaust pipe (200) in the longitudinal direction to neutralize the condensate by a neutralizing agent;
a urea liquid case (520) for accommodating a crude urea liquid therein;
a fluid mixing case (530) for mixing the condensate and the urea liquid flowing from the condensate neutralization case (510) and urea liquid case (520);
a motor (540) mounted in a flowing pipeline (531) connected to the fluid mixing case (530) and the exhaust pipe (200); and
a spray nozzle (550) mounted at an end portion of the flowing pipeline (531) to spray the mixed liquid flowing from the fluid mixing case (530) into the exhaust pipe (200).

## Patentansprüche

1. Brennwertkessel zur Reinigung von Abgasen, umfassend:
einen Kesselkörper (100) aufweisend eine Verbrennungseinheit (110) beinhaltend einen Brenner (120) zur Verbrennung von Brennstoff und einen Wärmetauscher (130);
ein Abgasrohr (200) aufweisend eine Seite einer Längsrichtung, die mit der Verbrennungseinheit (110) verbunden ist und die andere Seite der Längsrichtung sich von dem Kesselkörper (100) nach oben erstreckt, um nach außen zu ragen, und beinhaltend einen Kohlenmonoxid-Katalysatorfilter (210), der innerhalb der einen Seite der Längsrichtung, die mit der Verbrennungseinheit (110) verbunden ist, montiert ist, um Kohlenmonoxid zu filtern, das in dem Abgas enthalten ist, das während der Verbrennung des Brennstoffs durch die Verbrennungseinheit (110) erzeugt wird;
ein Filterrohr (300), das so montiert ist, dass es mit der anderen Seite des Abgasrohrs (200) in der Längsrichtung verbunden werden kann, und das einen Stickoxid-Katalysatorfilter (320) enthält, der darin abnehmbar montiert ist, um Stickoxid zu filtern, das in dem aus dem Abgasrohr (200) strömenden Abgas enthalten ist; und
eine Filterschiebeeinheit (400), die an dem Filterrohr (300) montiert ist, so dass der Stickoxid-Katalysatorfilter (320) geneigt wird, wenn der Stickoxid-Katalysatorfilter (320) ausgetauscht wird,
wobei eine vorstehende Backe (330) am Innenumfang des Filterrohrs (300) aufweisend den Stickoxid-Katalysatorfilter (320) ausgebildet ist, um in der Einwärtsrichtung des Filterrohrs (300) vorzustehen, so dass eine Kante einer Seite des Stickoxid-Katalysatorfilters (320) an der vorstehenden Backe (330) festgehalten wird, wenn der Stickoxid-Katalysatorfilter (320) in das Filterrohr (300) eingesetzt wird,
wobei ein elastisches Verriegelungselement (370), dessen beide Enden in eine am Innenumfang des Filterrohrs (300) ausgebildete Verriegelungsnut (340) eingesetzt sind, mit einer Kante der anderen Seite des an der vorstehenden Backe (330) gehaltenen Stickoxid-Katalysatorfilters (320) in Kontakt kommt,
wobei die Filterschiebeeinheit (400) Folgendes beinhaltet: ein Schiebeelement (410), dessen eine Seite der Längsrichtung in engen Kontakt mit der Kante einer Seite des Stickoxid-Katalysatorfilters (320) kommt und die andere Seite der Längsrichtung sich zu der anderen Seite des Abgasrohrs (200) in der Längsrichtung erstreckt; und einen Verlängerungseinsteller (420), der mit der anderen Seite des Schiebeelements (410) in der Längsrichtung verbunden ist und durch ein Führungslangloch (350), das im Filterrohr (300) ausgebildet ist, nach außen freiliegt,
wobei der Verlängerungseinsteller (420) Folgendes beinhaltet: ein Verlängerungselement (421), das sich von der anderen Seite des Schiebeelements (410) in die Längsrichtung nach außen erstreckt; und ein drehbares Greifelement (422), das drehbar an einem Endbereich des Verlängerungselements (421) montiert ist und einen hängenden Vorsprung (423) aufweist, der in ein Loch (360) eingesetzt ist, das in dem Außenumfang des Filterrohrs (300) ausgebildet ist, und
wobei ein Zugfederelement (430) in dem Führungslangloch (350) so montiert ist, dass eine Seite des Zugfederelements (430) in der Längsrichtung mit dem Verlängerungseinsteller (420) verbunden ist und die andere Seite mit dem Filterrohr (300) verbunden ist.

2. Brennwertkessel gemäß Anspruch 1, ferner umfassend:
eine Harnstoff-Flüssigkeitssprüheinheit (500) zum Sprühen einer gemischten Flüssigkeit, in der Harnstoffflüssigkeit gemischt ist, ist in das Abgasrohr (200) innerhalb des Kesselkörpers (100) montiert.

3. Brennwertkessel gemäß Anspruch 2, wobei die Harnstoff-Flüssigkeitssprüheinheit (500) Folgendes beinhaltet:
ein Kondensatneutralisierungsgehäuse (510) zur Aufnahme von saurem Kondensat, das von der anderen Seite des Abgasrohrs (200) in Längsrichtung nach unten fließt, um das Kondensat durch ein Neutralisierungsmittel zu neutralisieren;
ein Harnstoff-Flüssigkeitsgehäuse (520) zur Aufnahme einer Rohharnstoff-Flüssigkeit darin;
ein Fluidmischgehäuse (530) zum Mischen des Kondensats und der Harnstoffflüssigkeit, die aus dem Kondensatneutralisierungsgehäuse (510) und dem Harnstoffflüssigkeitsgehäuse (520) strömen;
einen Motor (540), der in einer fließenden Rohrleitung (531) montiert ist, die mit dem Fluidmischgehäuse (530) und dem Abgasrohr (200) verbunden ist; und
eine Sprühdüse (550), die an einem Endbereich der fließenden Rohrleitung (531) montiert ist, um die gemischte Flüssigkeit, die aus dem Fluidmischgehäuse (530) fließt, in das Abgasrohr (200) zu sprühen.

## Revendications

1. Chaudière à condensation pour l'épuration des gaz d'échappement comprenant :
un corps de chaudière (100) avec une unité de combustion (110) comprenant un brûleur (120) pour brûler le combustible et un échangeur de chaleur (130) ;
un tuyau d'échappement (200) dont un côté de la direction longitudinale est relié à l'unité de combustion (110), et dont l'autre côté de la direction longitudinale s'étend vers le haut à partir du corps de la chaudière (100) pour faire saillie vers l'extérieur, et comprenant un filtre catalyseur de monoxyde de carbone (210) monté à l'intérieur du côté de la direction longitudinale relié à l'unité de combustion (110) pour filtrer le monoxyde de carbone contenu dans le gaz d'échappement généré pendant la combustion du combustible par l'unité de combustion (110) ;
un tuyau de filtrage (300) monté pour être relié à l'autre côté du tuyau d'échappement (200) dans la direction longitudinale, et comprenant un filtre catalytique d'oxyde d'azote (320) monté de manière amovible à l'intérieur pour filtrer l'oxyde d'azote contenu dans les gaz d'échappement s'écoulant du tuyau d'échappement (200) ; et
une unité de poussée du filtre (400) montée sur le tuyau de filtrage (300) de sorte que le filtre catalytique à oxyde d'azote (320) soit incliné lorsque le filtre catalytique à oxyde d'azote (320) est remplacé,
dans lequel une mâchoire de saillie (330) est formée sur la circonférence intérieure du tuyau de filtration (300) comportant le filtre catalytique à oxyde d'azote (320) pourfaire saillie dans la direction intérieure du tuyau de filtration (300) de sorte qu'un bord d'un côté du filtre catalytique à oxyde d'azote (320) soit pris dans la mâchoire de saillie (330) lorsque le filtre catalytique à oxyde d'azote (320) est inséré dans le tuyau de filtration (300),
dans lequel un élément de verrouillage élastique (370) dont les deux extrémités sont insérées dans une rainure de verrouillage (340) formée sur la circonférence intérieure du tuyau de filtrage (300) entre en contact avec un bord de l'autre côté du filtre catalytique à oxyde d'azote (320) retenu par la mâchoire de saillie (330),
l'unité de poussée du filtre (400) comprend : un élément de poussée (410) dont un côté de la direction longitudinale entre en contact étroit avec le bord d'un côté du filtre catalytique à oxyde d'azote (320) et l'autre côté de la direction longitudinale s'étend jusqu'à l'autre côté du tuyau d'échappement (200) dans la direction longitudinale ; et un ajusteur d'extension (420) relié à l'autre côté de l'élément de poussée (410) dans la direction longitudinale et exposé à l'extérieur par un trou de guidage long (350) formé dans le tuyau de filtrage (300),
dans lequel l'ajusteur d'extension (420) comprend : un élément d'extension (421) s'étendant vers l'extérieur depuis l'autre côté de l'élément de poussée (410) dans la direction longitudinale ; et un élément de préhension rotatif (422) monté rotatif à une partie d'extrémité de l'élément d'extension (421) et ayant une saillie de suspension (423) insérée dans un trou (360) formé dans la circonférence extérieure du tuyau de filtrage (300), et
dans lequel un élément de ressort de tension (430) est monté dans le trou long de guidage (350) de telle sorte qu'un côté de l'élément de ressort de tension (430) dans la direction longitudinale est relié à l'ajusteur d'extension (420) et l'autre côté est relié au tuyau de filtrage (300).

2. La chaudière à condensation selon la revendication 1, comprenant en outre :
une unité de pulvérisation de liquide d'urée (500) pour pulvériser un liquide mixte dans lequel le liquide d'urée est mélangé dans le tuyau d'échappement (200) est monté à l'intérieur du corps de la chaudière (100).

3. La chaudière à condensation selon la revendication 2, dans laquelle l'unité de pulvérisation de liquide d'urée (500) comprend :
un boîtier de neutralisation des condensats (510) destiné à recevoir les condensats acides s'écoulant vers le bas depuis l'autre côté du tuyau d'échappement (200) dans la direction longitudinale afin de neutraliser les condensats à l'aide d'un agent de neutralisation ;
un boîtier de liquide d'urée (520) destiné à contenir un liquide d'urée brut ;
un boîtier de mélange de fluides (530) pour mélanger le condensat et le liquide d'urée s'écoulant du boîtier de neutralisation du condensat (510) et du boîtier de liquide d'urée (520) ;
un moteur (540) monté dans une conduite d'écoulement (531) reliée au boîtier de mélange de fluides (530) et au tuyau d'échappement (200) ; et
une buse de pulvérisation (550) montée à une extrémité de la conduite d'écoulement (531) pour pulvériser le liquide mélangé s'écoulant du boîtier de mélange de fluides (530) dans le tuyau d'échappement (200).
